# EUROPÄISCHE PATENTSCHRIFT

(11) **EP 2 939 961 B1**
(45) Veröffentlichungstag und Bekanntmachung des Hinweises auf die Patenterteilung: **13.06.2018**
(21) Anmeldenummer: 15156469.7
(22) Anmeldetag: 25.02.2015
(51) Int. Cl.: B65G 57/00

(54) **PALETTIERVORRICHTUNG FÜR DAS STAPELN VON GEFÜLLTEN SÄCKEN**
PALLETIZING DEVICE FOR STACKING FILLED BAGS
DISPOSITIF DE PALETTISATION POUR L'EMPILEMENT DE SACS PLEINS

(30) Priorität: 28.04.2014 DE 102014105934
(43) Veröffentlichungstag der Anmeldung: 04.11.2015
(60) Teilanmeldung: 18153338.1
(73) Patentinhaber: Windmöller & Hölscher KG, 49525 Lengerich (DE)
(72) Erfinder: Kölker, Martin, 49477 Ibbenbüren (DE); Hawighorst, Thomas, 49205 Hasbergen (DE); Renken, Hans, 26639 Wiesmoor (DE); Smid, Roman, 77900 Olomouc (CZ); Halír, Vaclav, 75002 Prerov (CZ); Rychlik, Markus, 59073 Hamm (DE); Bensmann, Stefan, 49170 Hagen a. T. W. (DE); Sporka, Michal, 03601 Martin (SK); Ahlers, Ralf, 49525 Lengerich (DE); Steinberg, Jürgen, 48477 Hörstel (DE)

(56) Entgegenhaltungen:
- WO-A1-2013/038102
- DE-A1- 2 750 761
- DE-A1- 3 107 495
- FR-A1- 2 407 878
- FR-A1- 2 975 979
- US-A- 3 294 257

## Beschreibung

Die vorliegende Erfindung betrifft eine Palettiervorrichtung für das Stapeln von gefüllten Säcken sowie ein entsprechendes Verfahren für das Ausgleichen von Ungleichmäßigkeiten in einer derartigen Palettiervorrichtung.

Es ist bekannt, dass Palettiervorrichtungen zum Stapeln von Säcken zu Sackstapeln eingesetzt werden. Dies dient einer besseren Transportfähigkeit sowie einer besseren Lagerfähigkeit der gefüllten Säcke. Hierfür ist üblicherweise eine Schiebevorrichtung vorgesehen, auf welcher Lagen der gefüllten Säcke ausgebildet werden können. Die einzelnen Lagen werden übereinander zu dem Sackstapel aufgeschichtet. Auch ist es bekannt, dass vor dem Aufsetzen bzw. Aufschichten der letzten Lage ein Ausrichten der jeweiligen Lage erfolgt. Dies wird innerhalb der Schiebevorrichtung durchgeführt.

Nachteilhaft bei den bekannten Palettiervorrichtungen ist es, dass der Sackstapel üblicherweise eine gewisse Inhomogenität aufweist. Diese Inhomogenität bezieht sich insbesondere auf unterschiedliche inhomogene Positionierungen der gefüllten Säcke bei unterschiedlichen Sackstapeln. Dies kann dazu führen, dass unterschiedliche Sackstapel unterschiedliche mechanische Belastbarkeiten aufweisen. Insbesondere kann dies dazu führen, dass einzelne Sackstapel aufgrund dieser Inhomogenität nicht die Mindestanforderung an die mechanische Belastbarkeit erfüllen. Um diesem Nachteil zu begegnen, wird häufig die Mindestanforderung an die mechanische Stabilität sehr hoch angesetzt, so dass nur aufwendige bzw. komplexe Lagebilder diese Anforderungen erfüllen. Damit wird die Palettieraufgabe deutlich komplexer als eigentlich notwendig, so dass unerwünscht lange Zeit für den Palettiervorgang benötigt wird. Insbesondere basiert diese Inhomogenität darauf, dass die gefüllten Säcke hinsichtlich ihres Füllgutes, hinsichtlich ihrer tatsächlichen Positionierung in der Lage sowie die Relativpositionierung der Lagen zueinander in Summe unterschiedliche Inhomogenitäten aufweisen können, die bei einem gesamten Sackstapel eine eindeutig erkennbare mechanische Destabilisierung mit sich bringen.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise das Packen der Lagen im Sackstapel zu verbessern.

Voranstehende Aufgabe wird gelöst durch eine Palettiervorrichtung mit den Merkmalen des Anspruchs 1 sowie ein Verfahren mit den Merkmalen des Anspruchs 6. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Palettiervorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Eine erfindungsgemäße Palettiervorrichtung dient dem Stapeln von gefüllten Säcken zu einem Sackstapel. Hierfür weist die Palettiervorrichtung eine Schiebevorrichtung mit einer Schiebefläche und einem neben der Schiebefläche angeordneten Schiebetisch auf. Weiter ist ein Schieber vorgesehen für ein Schieben einer Lage der Säcke von der Schiebefläche auf den Schiebetisch. Darüber hinaus weist die erfindungsgemäße Palettiervorrichtung eine Hubvorrichtung für die Aufnahme des Sackstapels unterhalb des Schiebetisches auf. Die erfindungsgemäße Palettiervorrichtung zeichnet sich dadurch aus, dass eine Rüttelvorrichtung vorgesehen ist für ein Rütteln des Sackstapels zur Reduktion von Unebenheiten der Lagen der gefüllten Säcke im Sackstapel.

Erfindungswesentlich ist es, dass die Rüttelvorrichtung zum Rütteln des Sackstapels und nicht zum Rütteln der einzelnen Lagen vorgesehen ist. Insbesondere korreliert also die Rüttelvorrichtung mit einer Position, welche der Schiebevorrichtung hinsichtlich ihrer Funktion nachgeordnet ist. Wie bei bekannten Palettiervorrichtungen wird also auch bei der erfindungsgemäßen Palettiervorrichtung in der Schiebevorrichtung eine Lage ausgebildet. Diese Lage dient dazu, eine entsprechende Schicht in dem Sackstapel auszubilden. Sobald die Lage aus ein, zwei oder mehr Reihen der gefüllten Säcke ausgebildet worden ist, kann diese Lage vom Schieber von der Schiebefläche auf den Schiebetisch geschoben werden. Danach ist es möglich, dass auf dem Schiebetisch ein Ausrichten in optionaler Weise erfolgt. Für dieses Ausrichten ist es denkbar, dass der Schieber und ein statisches oder bewegbares Widerlager ein Längsausrichten durch entsprechende Ausrichtkräfte durchführt. Zusätzlich oder alternativ ist es möglich, dass ein Querausrichten durch entsprechende Ausrichtdrücker durchgeführt wird. Anschließend wird nach einem Öffnen einzelner Schiebetischelemente diese Lage auf die Lage unterhalb des Schiebetisches bzw. eine entsprechende Palette bzw. eine entsprechende Hubvorrichtung abgelassen. Anschließend kann das gesamte System mit der Hubvorrichtung weiter nach unten bewegt werden, um ein Schließen der Schiebetischelemente wieder zu ermöglichen.

Nachdem die voranstehenden Schritte durchgeführt worden sind, greift eine erfindungsgemäße Rüttelvorrichtung ein und bringt eine Rüttelbewegung in den Sackstapel ein. Darunter ist zu verstehen, dass hinsichtlich einer Rüttelbewegung, also zum Beispiel einer Auf- und Ab-Bewegung, einer seitlichen Bewegung oder einer Vibrationsbewegung der gesamte Sackstapel in Bewegung versetzt wird. Die Bewegungsamplitude ist dabei sehr klein, wobei jedoch mit einer relativ hohen Frequenz in der Rüttelbewegung gearbeitet wird.

Dies führt dazu, dass keinerlei mechanische Beeinträchtigung in die Stabilität des Sackstapels eingebracht wird. Vielmehr wird durch diese Ausführungsform ein Rütteln der einzelnen gefüllten Säcke, der einzelnen Reihen und der einzelnen Lagen durchgeführt. Dies führt dazu, dass zu allererst das Füllgut innerhalb der gefüllten Säcke in eine entsprechende Bewegung versetzt wird. Da es sich beim Füllgut häufig um fließfähige Schüttgüter handelt, kann durch das Rütteln eine gleichmäßigere Verteilung des Schüttguts in dem jeweiligen Sack erfolgen. Gleichzeitig wird der jeweilige gefüllte Sack hinsichtlich seiner Positionierung von allen seiner Kontaktflächen zu benachbarten gefüllten Säcken bewegt bzw. in Bewegung versetzt, so dass auch hier Abstände und inhomogene Ausrichtungen reduziert werden können. Nicht zuletzt werden die einzelnen Lagen relativ zueinander in eine Rüttelbewegung versetzt, so dass auch hier inhomogene Abstandssituationen in lokalen Bereichen vermieden bzw. reduziert oder sogar vollständig aufgehoben werden können.

Zusammenfassend wird durch die Rüttelbewegung mit der Rüttelvorrichtung also eine Inhomogenität im Sackstapel reduziert bzw. vollständig aufgehoben. Dies führt dazu, dass aus mechanischer Stabilitätssicht die einzelnen Sackstapel mit höherer Gleichheit herstellbar bzw. stapelbar sind. Damit kann mit geringeren Anforderungen an das Mindestmaß an mechanischer Stabilität der Palettiervorgang durchgeführt werden, so dass ein entsprechender Zeitgewinn im Palettiervorgang erzielbar wird.

Es kann vorteilhaft sein, wenn bei einer erfindungsgemäßen Palettiervorrichtung die Schiebevorrichtung, insbesondere der Schiebetisch, die Rüttelvorrichtung aufweist. Dabei kann nach dem jeweiligen Ausbilden und Einbringen der Lage in den Sackstapel bzw. nach dem Beenden des gesamten Stapelvorgangs mithilfe der Hubvorrichtung der gesamte Sackstapel von unten an den Schiebetisch herangefahren werden, so dass die oberste Lage des Sackstapels den Schiebetisch von unten berührt. Der Schiebetisch kann nun eine Antriebsvorrichtung aufweisen, die die Rüttelvorrichtung zumindest teilweise ausbildet. Damit wird der Schiebetisch für die Rüttelbewegung in eine entsprechende Bewegung versetzt, welche sich über die Kontaktfläche der Unterseite des Schiebetisches auf die Oberseite der obersten Lage des Sackstapels übertragen kann. Damit wird der gesamte Sackstapel von oben in eine Rüttelbewegung versetzt, um die bereits beschriebenen Vorteile zu erzielen. Selbstverständlich kann das Rütteln auch erst nach Abschluss des gesamten Stapelvorgangs für den fertigen Sackstapel erfolgen. Jedoch ist es auch denkbar, dass die Rüttelbewegung bei einzelnen Lagen während des Stapels oder sogar bei jeder aufgebrachten Lage neu durchgeführt wird. Da üblicherweise nach dem Aufsetzen der neuen Lage auf den sich ausbildenden Sackstapel der Schiebetisch frei ist, da während dieser Zeit auf der Schiebefläche die nächste Lage ausgebildet wird, kann diese Zeit genützt werden, um eine Rüttelbewegung von oben durch den Schiebetisch einzubringen, ohne dass ein Zeitverlust für den gesamten Palettiervorgang stattfindet. Selbstverständlich kann bei einem Schiebetisch, welcher die Rüttelvorrichtung aufweist, diese Rüttelbewegung auch eine unterstützende Wirkung bei einem Ausrichtvorgang auf der Oberseite des Schiebetisches haben. Dies führt dazu, dass bereits das Ausrichten ohne Zeitverlust mit einer höheren Qualität durchgeführt werden kann.

Erfindungsgemäß ist, wenn bei einer erfindungsgemäßen Palettiervorrichtung die Hubvorrichtung die Rüttelvorrichtung aufweist. Hierbei weist die Hubvorrichtung alleine die Rüttelvorrichtung aufweist. Jedoch kann die Rüttelvorrichtung auch an mehreren Stellen parallel vorgesehen sein, so dass zum Beispiel die Hubvorrichtung und der Schiebetisch gemeinsam die Rüttelvorrichtung aufweisen können. Sofern die Hubvorrichtung die Rüttelvorrichtung oder zumindest einen Teil der Rüttelvorrichtung aufweist, kann die Rüttelbewegung von unten bzw. zusätzlich auch von unten eingebracht werden. Insbesondere bei einem palettenfreien Stapel, also bei einem Sackstapel, welcher direkt auf der Hubvorrichtung sitzt, kann dies besonders kostengünstig und einfach erfolgen. Da die Hubvorrichtung üblicherweise einen Antrieb für eine Auf- und Ab-Bewegung aufweist, ist dieser Antrieb ausgebildet in Funktionsunion als Antrieb der Rüttelvorrichtung. Dies führt dazu, dass die gesamte Rüttelbewegung von der Schiebevorrichtung unabhängig ausgebildet ist. Gleichzeitig kann durch die Funktionsunion des Antriebs eine weitere Kostenreduktion sowie eine Reduktion des Platzbedarfes sichergestellt werden. Nicht zuletzt wird durch die Gewichtskraft des Sackstapels, mit welcher dieser auf der Hubvorrichtung lastet, eine sichere Kontaktierung der Hubvorrichtung und damit der Rüttelvorrichtung sichergestellt, so dass die entsprechende Übertragung der Rüttelbewegung auch mit hoher Qualität sichergestellt wird. Erfolgt eine Kombination der Rüttelvorrichtung in der Hubvorrichtung und im Schiebetisch, so kann vorzugsweise eine gemeinsame Antriebsvorrichtung vorgesehen sein. Auch ist es möglich, dass eine Synchronisation der Antriebsvorrichtungen vorliegt, so dass die Rüttelvorrichtung eine gemeinsame und vor allem synchrone Rüttelbewegung aus Hubvorrichtung einerseits und Schiebetisch andererseits ermöglicht.

Weiter kann es von Vorteil sein, wenn bei einer erfindungsgemäßen Palettiervorrichtung die Rüttelvorrichtung separat von der Hubvorrichtung und der Schiebevorrichtung ausgebildet ist und eine Kontaktfläche für ein Kontaktieren des Sackstapels und ein Übertragen der Rüttelbewegung aufweist. Dies führt dazu, dass eine solche Rüttelvorrichtung auch bei bestehenden Palettiervorrichtungen nachrüstbar ausgebildet ist. So kann die Kontaktfläche möglichst groß ausgebildet sein, um eine möglichst großflächige Übertragung der Rüttelbewegung zu ermöglichen. Dies erlaubt es in möglichst homogener Weise, die Rüttelbewegung in den gesamten Sackstapel einzubringen. Beispielsweise ist eine seitliche Kontaktfläche denkbar, die entsprechend über einen Schwenkarm in Kontakt mit dem Sackstapel gebracht werden kann. So kann die gesamte Rüttelvorrichtung und damit die Rüttelfunktion auch automatisch ein- und ausgeschaltet werden. Auch einzelne Bauteile, wie zusätzliche Rollen innerhalb der Hubvorrichtung, können eine solche bewegbare Kontaktfläche einer separaten Rüttelvorrichtung ausbilden.

Erfindungsgemäß ist, wenn bei einer erfindungsgemäßen Palettiervorrichtung die Rüttelvorrichtung für das Einbringen einer Rüttelbewegung in den Sackstapel mit einer Auf-und Ab-Bewegung ausgebildet ist. Dabei handelt es sich um eine Möglichkeit einer Rüttelbewegung, bei welcher sozusagen in senkrechter bzw. waagerechter Weise die Rüttelbewegung eingebracht wird. Die Auf- und Ab-Bewegung weist dabei eine Auf-und-Ab-Amplitude auf, welche kleiner als ca. 5 cm, bevorzugt kleiner als ca. 1 cm ausgebildet ist. Die Bewegung weist dabei vorzugsweise eine Frequenz auf, welche eine Vibration in Auf- und Abrichtung hervorruft. Insbesondere erfolgt dies mit einer Korrelation der Rüttelvorrichtung mit der Hubvorrichtung, da dort bereits eine Auf- und Ab-Bewegung mit einem entsprechenden Antrieb der Hubvorrichtung erbracht wird.

Ein weiterer Vorteil ist erzielbar, wenn bei einer erfindungsgemäßen Palettiervorrichtung die Rüttelvorrichtung für das Einbringen einer Rüttelbewegung in den Sackstapel mit einer seitlichen, insbesondere mit einer horizontalen, Bewegung ausgebildet ist. Mit einer seitlichen bzw. waagerechten oder horizontalen Bewegung kann also eine Hin- und Herbewegung als Rüttelbewegung definiert werden. Diese Bewegung kann selbstverständlich in Kombination mit den weiteren Möglichkeiten einer Rüttelbewegung eingesetzt werden. Auch hier ist vorzugsweise eine Bewegungsamplitude von weniger als ca. 5 cm, bevorzugt weniger als ca. 1 cm, vorgesehen. Insbesondere ist eine seitliche Rüttelbewegung mit einer horizontalen Rüttelbewegung kombiniert und synchron durchgeführt. Ist die Rüttelvorrichtung auf unterschiedliche Bauteile, also zum Beispiel dem Schiebetisch und die Hubvorrichtung gemeinsam verteilt, so kann zum Beispiel die Hubvorrichtung für die Rüttelbewegung in Auf- und Abrichturig und der Schiebetisch für eine Rüttelbewegung in seitlicher Ausrichtung eingesetzt werden. Die seitliche Rüttelbewegung dient insbesondere dazu, entsprechende Bergspitzen innerhalb des Schüttgutes innerhalb der gefüllten Säcke abzutragen, so dass in dieser Richtung eine zusätzliche Homogenisierungswirkung zu erzielen ist.

Vorteilhaft ist es weiter, wenn bei einer erfindungsgemäßen Palettiervorrichtung die Rüttelvorrichtung für das Einbringen einer Rüttelbewegung in den Sackstapel in Form einer Vibration ausgebildet ist. Darunter ist zu verstehen, dass mit Frequenzen von mehr als ca. 10 Hz, insbesondere von mehr als ca. 50 Hz, aber unterhalb von ca. 100 Hz, diese Rüttelbewegung durchgeführt wird. Selbstverständlich können auch andere Frequenzbereiche vorgesehen werden, wenn dies mit der entsprechenden Rüttelvorrichtung korreliert bzw. bei entsprechenden Schüttgütern innerhalb der gefüllten Säcke erforderlich ist. Dabei wird jedoch die Frequenz der Rüttelbewegung abgestimmt auf die einzelnen Maschinenelemente. Insbesondere werden Eigenfrequenzen bzw. Eigenfrequenzbereiche der gesamten Maschinenelemente vermieden, so dass ein unerwünschtes Einschwingen oder Aufschwingen der Palettiervorrichtung oder einzelner Bauteile vermieden werden kann.

Darüber hinaus ist es von Vorteil, wenn bei einer erfindungsgemäßen Palettiervorrichtung eine Sensorvorrichtung vorgesehen ist für die Bestimmung einer Rüttelbewegung der Schiebeyorrichtung und/oder der gesamten Palettiervorrichtung. Die Sensorvorrichtung kann dabei insbesondere die Schwingungsfrequenz und/oder die Schwingungsamplitude der Rüttelbewegung erkennen. Damit wird eine Rückkopplung vorgebbar, so dass ein Regelkreis zur Regelung der Rüttelvorrichtung ausgebildet werden kann. Eigenschwingungen innerhalb der Palettiervorrichtung bzw. innerhalb der Schiebevorrichtung können dabei durch rechtzeitiges Erkennen der real eingebrachten Rüttelbewegung wirksam vermieden werden.

Ein weiterer Gegenstand der vorliegenden Erfindung ist ein Verfahren für das Ausgleichen von Ungleichmäßigkeiten in einer Palettiervorrichtung gemäß der vorliegenden Erfindung, in einen Sackstapel gefüllter Säcke, aufweisend die folgenden Schritte:
- Einbringen einer Rüttelbewegung mittels einer Rüttelvorrichtung

Durch den Einsatz einer erfindungsgemäßen Palettiervorrichtung bringt ein erfindungsgemäßes Verfahren die gleichen Vorteile mit sich, wie sie ausführlich mit Bezug auf eine erfindungsgemäße Palettiervorrichtung erläutert worden sind.

Ein erfindungsgemäßes Verfahren lässt sich dahingehend weiterbilden, dass die Rüttelbewegung nach dem Stapeln jeder Lage in den sich ausbildenden Sackstapel und/oder in den fertiggestellten Sackstapel eingebracht wird. Da, wie bereits erläutert worden ist, eine Zeitspanne frei verfügbar ist, während der auf der Schiebefläche die nächste Lage zum Aufstapeln hergerichtet wird, kann in dieser Zeitspanne nun die Rüttelbewegung für jede Lage durchgeführt werden. Mit anderen Worten wird der sich ausbildende Sackstapel nach jeder aufgebrachten und aufgeschichteten Lage gerüttelt, so dass Inhomogenitäten bereits während des Stapelns vermieden werden können bzw. sich gar nicht erst ausbilden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform eines Sackstapels in seitlicher Darstellung,
- Fig. 2: eine Ausführungsform einer Palettiervorrichtung,
- Fig. 3: die Ausführungsform der Fig. 2 in einem weiteren Palettierzustand,
- Fig. 4: eine Ausführungsform einer Rüttelvorrichtung,
- Fig. 5: eine weitere Ausführungsform einer Rüttelvorrichtung, und
- Fig. 6: eine weitere Ausführungsform einer Rüttelvorrichtung.

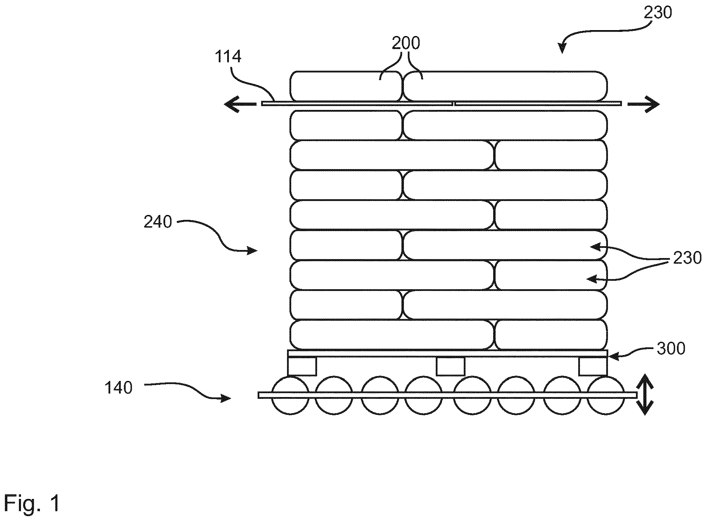

Fig. 1 zeigt in schematischer Seitendarstellung, wie eine Hubvorrichtung 140 eine Palette 300 trägt. Die Hubvorrichtung 140 kann gemeinsam mit der Palette 300 auf und ab bewegt werden, wie dies der Doppelpfeil anzeigt. Auf der Palette 300 ist ein Sackstapel 240 angeordnet, welcher aus einer Vielzahl von Lagen 230 besteht. Um diesen Sackstapel 240 aufzustapeln, kann ein Schiebetisch 114 geöffnet werden, auf welchem eine Lage 230 gefüllter Säcke 200 anordenbar ist. Beim Öffnen sackt die gesamte Lage 230 auf die darunterliegende Lage 230 des Sackstapels 240 ab. Anschließend wird die Hubvorrichtung 140 zumindest um die Sackbreite der Säcke 200 abgesenkt, so dass sich der Schiebetisch 114 nun wieder schließen kann, um eine weitere Lage 230 der gefüllten Säcke 200 aufzunehmen.

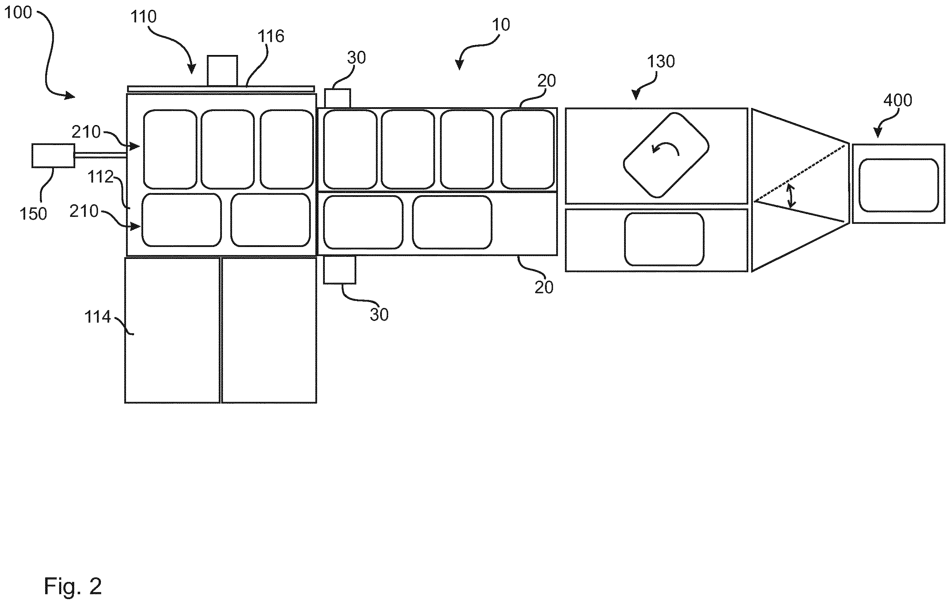

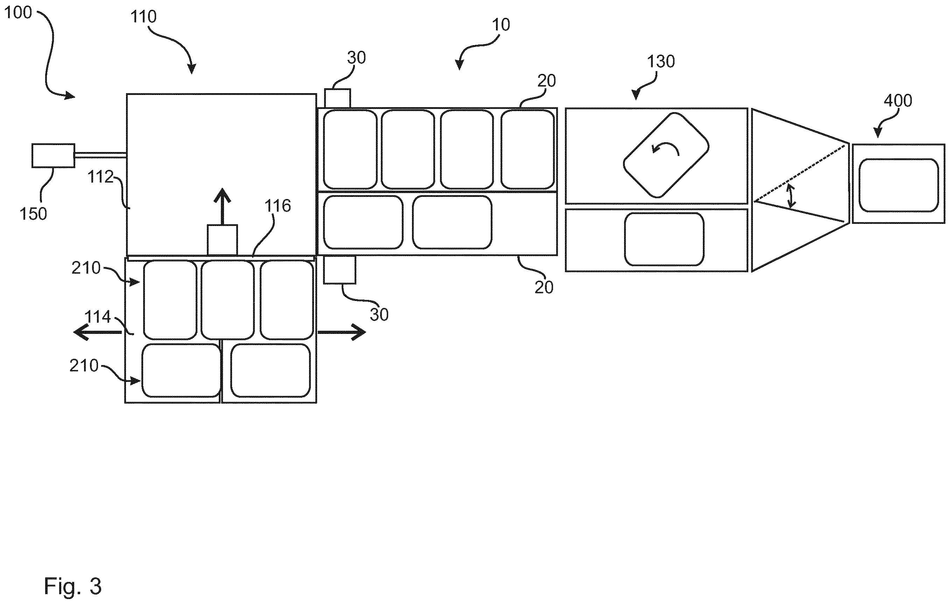

Anhand der Fig. 2 und 3 ist erläuterbar, in welcher Weise sich die Lagen 230 der gefüllten Säcke ausbilden. So wird rechts über eine Herstellvorrichtung 400, welche zum Beispiel als sogenannte Form-Fill-and-Seal-Maschine gefüllte Säcke 200 herstellen kann, ein zur Verfügung stellen dieser Säcke 200 gewährleistet. Über eine schematisch dargestellte Weiche kann nun eine Verteilung der gefüllten Säcke 200 auf eine Drehvorrichtung 130 erfolgen. In der Drehvorrichtung 130 wird eine Rotationsausrichtung der einzelnen gefüllten Säcke anpassbar, um unterschiedliche Lagebilder auf der Schiebefläche 112 der Schiebevorrichtung 110 erzeugen zu können. Als Zufuhrvorrichtung 10, welche auch als Puffer wirkt, sind hier zwei Zufuhrbänder 20 mit eigenen Antrieben 30 vorgesehen. Das bedeutet, dass bei dieser Ausführungsform zwei Reihen 210 der gefüllten Säcke 200 gleichzeitig und damit zeitlich parallel auf die Schiebefläche 112 der Schiebevorrichtung 110 zugeführt werden können. Am Ende dieses Zufuhrvorgangs ergibt sich eine Situation, wie sie die Fig. 2 zeigt. Es ist also bereits ein Lagebild auf der Schiebefläche 112 durch fünf gefüllte Säcke 200 ausgebildet, so dass diese Lage 230 nun mit einem Schieber 116 auf den Schiebetisch 114 geschoben werden kann. Das Ergebnis dieser Bewegung ist in Fig. 3 dargestellt. Nun kann durch ein Öffnen des Schiebetisches 114 wieder das Absacken der Lage 230 erfolgen, wie es bereits mit Bezug auf Fig. 1 erläutert worden ist.

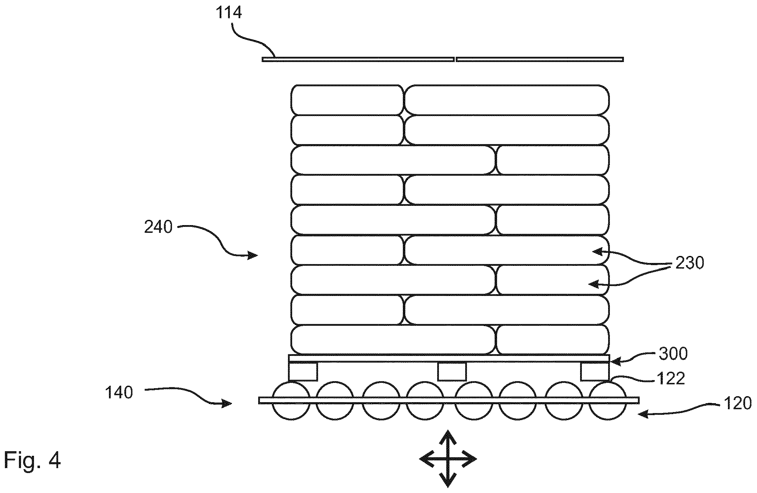

In Fig. 4 ist eine erste Ausführungsform einer Rüttelvorrichtung 120 dargestellt, welche hier zumindest abschnittsweise durch die Hubvorrichtung 140 ausgebildet worden ist. Die Rüttelvorrichtung 120 weist hier eine Kontaktfläche 122 in Form der einzelnen Rollen auf, auf welchen die Palette 300 und damit der Sackstapel 240 steht. Hier ist über einen gekreuzten Doppelpfeil zu erkennen, dass die Rüttelvorrichtung 120 durch die Hubvorrichtung 140 ausgebildet eine doppelte Vibrationsbewegung durchführen kann, nämlich sowohl in senkrechter, als auch in waagerechter Ausrichtung. Damit wird eine entsprechende Rüttelbewegung für die Homogenisierung der Ausrichtung der einzelnen Lagen 230, der einzelnen Säcke 200 sowie des entsprechenden Schüttgutes innerhalb der Säcke 200 erzeugt.

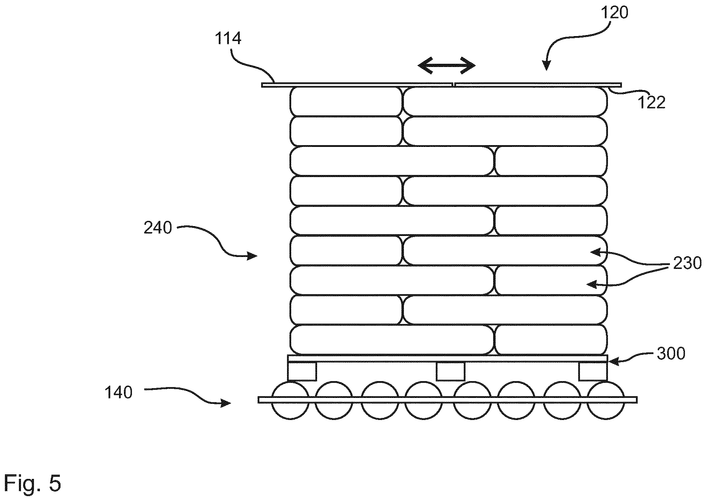

Fig. 5 zeigt eine alternative Ausführungsform, bei welcher die Rüttelvorrichtung 120 in dem Schiebetisch 114 vorgesehen ist. Wie hier durch den Doppelpfeil angezeigt wird, kann der Schiebetisch 114 eine waagerechte Bewegung als Rüttelbewegung ausführen und über die Unterseite als Kontaktfläche 122 in den entsprechenden Sackstapel 240 einbringen. Um dies zu ermöglichen, wurde mit der Hubvorrichtung 140 der gesamte Sackstapel 240 angehoben, um diesen Kontakt herzustellen. Selbstverständlich kann diese Ausführungsform der Rüttelvorrichtung 120 auch mit der Ausführungsform der Fig. 4 kombiniert werden, so dass sowohl der Schiebetisch 114, als auch die Hubvorrichtung 140 zumindest teilweise die Rüttelvorrichtung 120 aufweisen.

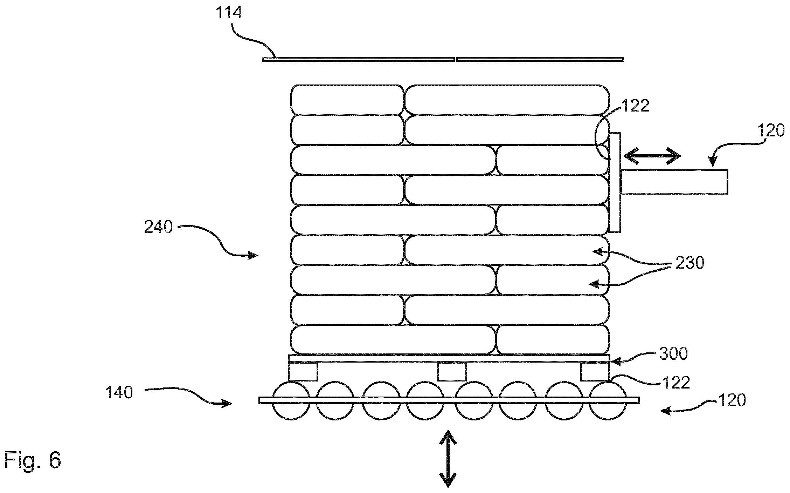

Fig. 6 zeigt eine weitere Ausführungsform einer Rüttelvorrichtung 122, die hier in kombinierter Weise ausgebildet ist. Zum einen ist wieder die Hubvorrichtung 140 als Rüttelvorrichtung 120 ausgebildet, jedoch hier nur für ein Einbringen einer Auf- und Ab-Bewegung. Die Kontaktfläche 122 dieses Teils der Rüttelvorrichtung 120 wird wieder durch die einzelnen Rollen der Hubvorrichtung 140 ausgebildet. Darüber hinaus ist separat vom Schiebetisch 114 und separat von der Hubvorrichtung 140 ein eigenes Bauteil als Rüttelvorrichtung 120 vorgesehen, welches durch seitliche Schwenkbewegung eine Kontaktfläche 122 seitlich an den Sackstapel 240 anlegen kann. Damit lässt sich nun auch von der Seite eine waagerechte Rüttelbewegung einbringen, so dass in Kombination wieder ein Vibrationseffekt als Rüttelbewegung erzielbar ist.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Zufuhrvorrichtung
- 20: Zufuhrband
- 30: Antriebsvorrichtung

- 100: Palettiervorrichtung
- 110: Schiebevorrichtung
- 112: Schiebefläche
- 114: Schiebetisch
- 116: Schieber
- 120: Rüttelvorrichtung
- 122: Kontaktfläche
- 130: Drehvorrichtung
- 140: Hubvorrichtung
- 150: Sensorvorrichtung

- 200: Sack
- 210: Reihe
- 230: Lage
- 240: Sackstapel

- 300: Palette
- 400: Herstellvorrichtung

## Patentansprüche

1. Palettiervorrichtung (100) für das Stapeln von gefüllten Säcken (200) zu einem Sackstapel (240), aufweisend eine Schiebevorrichtung (110) mit einer Schiebefläche (112) und einem neben der Schiebefläche (112) angeordneten Schiebetisch (114) sowie einem Schieber (116) für ein Schieben einer Lage (230) Säcke (200) von der Schiebefläche (112) auf den Schiebetisch (114), weiter aufweisend eine Hubvorrichtung (140) für die Aufnahme des Sackstapels (240) unterhalb des Schiebetisches (114),
**dadurch gekennzeichnet, dass**
eine Rüttelvorrichtung (120) vorgesehen ist für ein Rütteln des Sackstapels (240) zur Reduktion von Unebenheiten der Lagen (230) der gefüllten Säcke (200) im Sackstapel (240), wobei die Hubvorrichtung (140) die Rüttelvorrichtung (120) aufweist, wobei ein Antrieb für eine Auf-und Ab-Bewegung der Hubvorrichtung (140) auch einen Antrieb der Rüttelvorrichtung (120) ausbildet, wobei die Rüttelvorrichtung (120) für das Einbringen einer Rüttelbewegung in den Sackstapel (240) mit einer Auf- und Ab-Bewegung ausgebildet ist, wobei eine Auf-und-Ab-Amplitude der Auf- und Ab-Bewegung kleiner ca. 5cm ausgebildet ist.

2. Palettiervorrichtung (100) nach Anspruch 1,
**dadurch gekennzeichnet, dass**
die Schiebevorrichtung (110), insbesondere der Schiebetisch (114), eine weitere Rüttelvorrichtung (120) aufweist.

3. Palettiervorrichtung (100) nach Anspruch 2,
**dadurch gekennzeichnet, dass**
die weitere Rüttelvorrichtung (120) für das Einbringen einer Rüttelbewegung in den Sackstapel (240) mit einer seitlichen, insbesondere mit einer horizontalen, Bewegung ausgebildet ist.

4. Palettiervorrichtung (100) nach einem der vorangegangenen Ansprüche,
**dadurch gekennzeichnet, dass**
die Rüttelvorrichtung (120) für das Einbringen einer Rüttelbewegung in den Sackstapel (240) in Form einer Vibration ausgebildet ist.

5. Palettiervorrichtung (100) nach einem der vorangegangenen Ansprüche,
**dadurch gekennzeichnet, dass**
eine Sensorvorrichtung (150) vorgesehen ist für die Bestimmung einer Rüttelbewegung der Schiebevorrichtung (110) und/oder der gesamten Palettiervorrichtung (100).

6. Verfahren für das Ausgleichen von Ungleichmäßigkeiten in einer Palettiervorrichtung (100) mit den Merkmalen eines der Ansprüche 1 bis 5, in einen Sackstapel (240) gefüllter Säcke (200), aufweisend den folgenden Schritt:
- Einbringen einer Rüttelbewegung mittels einer Rüttelvorrichtung (120).

7. Verfahren nach Anspruch 6,
**dadurch gekennzeichnet, dass**
die Rüttelbewegung nach dem Stapeln jeder Lage (230) in den sich ausbildenden Sackstapel (240) und/oder in den fertig gestellten Sackstapel (240) eingebracht wird.

## Claims

1. A palletizing device (100) for the stacking of filled sacks (200) into a stack of sacks (240), having a pushing device (110) with a sliding surface (112) and a sliding table (114) arranged next to the sliding surface (112) as well as a pusher (116) for pushing a layer (230) of sacks (200) from the sliding surface (112) onto the sliding table (114), further having a lifting device (140) for receiving the stack of sacks (240) underneath the sliding table (114),
**characterized in that**
a vibrating device (120) is provided for a vibrating of the stack of sacks (240) for reducing unevennesses of the layers (230) of the filled sacks (200) in the stack of sacks (240), wherein the lifting device (140) has the vibrating device (120), wherein a drive for an up and down movement of the lifting device (140) also forms a drive of the vibrating device (120), wherein the vibrating device (120) for introducing a vibrating movement into the stack of sacks (240) is formed with an up and down movement, wherein an up and down amplitude of the up and down movement is formed which is less than approx. 5 cm.

2. A palletizing device (100) according to Claim 1,
**characterized in that**
the pushing device (110), in particular, the sliding table (114) has a further vibrating device (120).

3. A palletizing device (100) according to Claim 2,
**characterized in that**
the further vibrating device (120) for introducing a vibrating movement into the stack of sacks (240) is formed with a lateral, in particular, with a horizontal movement.

4. A palletizing device (100) according to any one of the preceding claims,
**characterized in that**
the vibrating device (120) for introducing a vibrating movement into the stack of sacks (240) is formed in the form of a vibration.

5. A palletizing device (100) according to any one of the preceding claims,
**characterized in that**
a sensor device (150) is provided for determining a vibrating movement of the pushing device (110) and/or of the entire palletizing device (100).

6. A method for compensating for unevennesses in a palletizing device (100) with the features of any one of Claims 1 to 5, in a stack of sacks (240) of filled sacks (200), having the following step:
- Introduction of a vibrating movement by means of a vibrating device (120).

7. A method according to Claim 6,
**characterized in that**
the vibrating movement is introduced after the stacking of each layer (230) into the forming stack of sacks (240) and /or into the completed stack of sacks (240).

## Revendications

1. Dispositif de palettisation (100) pour l'empilement de sacs pleins (200) en une pile de sacs (240), comprenant un dispositif de poussée (110) avec une surface de poussée (112) et une table de poussée (114) disposée près de la surface de poussée (112), ainsi qu'un poussoir (116) pour pousser une couche (230) de sacs (200) de la surface de poussée (112) vers la table de poussée (114), comprenant en outre un dispositif de levage (140) pour le logement de la pile de sacs (240) en dessous de la table de poussée (114),
**caractérisé en ce que**
un dispositif vibrant (120) est prévu pour la vibration de la pile de sacs (240) afin de réduire les irrégularités des couches (230) de sacs pleins (200) dans la pile de sacs (240), le dispositif de levage (140) comprenant le dispositif vibrant (120), un dispositif d'entraînement pour un mouvement vers le haut et vers le bas du dispositif de levage (140) constituant également un dispositif d'entraînement du dispositif vibrant (120), le dispositif vibrant (120) étant conçu pour la réalisation d'un mouvement de vibration dans la pile de sacs (240) avec un mouvement vers le haut et vers le bas, une amplitude du mouvement vers le haut et vers le bas étant inférieure à environ 5 cm.

2. Dispositif de palettisation (100) selon la revendication 1,
**caractérisé en ce que**
le dispositif de poussée (110), plus particulièrement la table de poussée (114), comprenant un dispositif vibrant (120) supplémentaire.

3. Dispositif de palettisation (100) selon la revendication 2,
**caractérisé en ce que**
le dispositif vibrant (120) supplémentaire est conçu pour la réalisation d'un mouvement de vibration dans la pile de sacs (240) avec un mouvement latéral, plus particulièrement horizontal.

4. Dispositif de palettisation (100) selon l'une des revendications précédentes,
**caractérisé en ce que**
le dispositif vibrant (120) est conçu pour la réalisation d'un mouvement de vibration dans la pile de sacs (240) sous la forme d'une vibration.

5. Dispositif de palettisation (100) selon l'une des revendications précédentes,
**caractérisé en ce que**
un dispositif de capteur (150) est prévu pour la détermination d'un mouvement de vibration du dispositif de poussée (110) et/ou de l'ensemble du dispositif de palettisation (100).

6. Procédé pour la compensation d'irrégularités dans un dispositif de palettisation (100) avec les caractéristiques d'une des revendications 1 à 5, dans une pile de sacs (240) de sacs pleins (200), comprenant l'étape suivante :
- réalisation d'un mouvement de vibration au moyen d'un dispositif vibrant (120).

7. Procédé selon la revendication 6,
**caractérisé en ce que**
le mouvement de vibration a lieu après l'empilement de chaque couche (230) dans la pile de sacs (240) en formation et/ou dans la pile de sacs (240) finie.
